# EUROPEAN PATENT SPECIFICATION

(11) **EP 1 182 954 B1**
(45) Date of publication and mention of the grant of the patent: **05.10.2005**
(21) Application number: 00901819.3
(22) Date of filing: 09.02.2000
(51) Int. Cl.: A47J 43/07

(54) **TOOL STORAGE ARRANGEMENTS FOR DOMESTIC APPLIANCES**
AUFNAHMEVORRICHTUNG FÜR DAS ZUBEHÖR VON HAUSHALTSGERÄTEN
DISPOSITIFS DE STOCKAGE D'ACCESSOIRES POUR APPAREILS ELECTROMENAGERS

(30) Priority: 18.02.1999 GB 9903775
(43) Date of publication of application: 06.03.2002
(73) Proprietor: KENWOOD MARKS LIMITED, Hampshire PO9 2HN (GB)
(72) Inventor: HARDING, John, Havant, Hampshire PO9 2NH (GB); SANTER, Johan, Havant, Hampshire PO9 2NH (GB)
(74) Representative: Marsh, Robin Geoffrey
(86) International application number: PCT/GB2000/000381
(87) International publication number: WO 2000/048498

(56) References cited:
- DE-C- 3 820 007
- DE-U- 8 705 778
- US-A- 4 575 255
- US-A- 4 645 352

## Description

This invention relates to tool storage arrangements for domestic appliances, especially such appliances as may be used for operations such as food mixing, processing etc, and which utilise removable tools for such purposes. A tool storage arrangement having the features of the preamble portion of claim 1 is known for example from US-A-4 575 255.

The tools used with such appliances are typically whisks, beaters and the like, and problems are often encountered with the storage of these tools when they and/or the appliances themselves are not in use. Typically the tools are kept loose and separately from the appliance and this can lead to their loss or damage, with the frustrating result that they are unavailable when the user wishes to employ them.

One approach to dealing with this problem is that disclosed in our co-pending UK patent application No. 9900476.4, wherein a tool storage arrangement is provided for a domestic appliance having one or more drive sockets adapted to releasably receive and hold for operation a shanked tool. The arrangement described in the aforementioned patent application comprises a preformed member having first and second, generally opposed, major surfaces, wherein the first of said surfaces bears a protrusion shaped and dimensioned to retentively engage in the or each drive socket and the second of said surfaces is formed with a slot dimensioned and shaped to grip the shank of the or each tool.

That arrangement is effective and convenient for domestic appliances using certain drive configurations, but the present invention aims at addressing the problem of tool storage in appliances of differing configuration and/or design.

In particular, the present invention is concerned with appliances of the kind in which the tools or attachments, such as whisks, blenders and mincers, are constructed, and geared if necessary, to allow them to operate with optimal speed/torque characteristics; an arrangement which increases the dimensions of the tools and decreases the size of the main drive housing, to an extent that the tools tend to be at least comparable in size with the drive housing.

This contrasts with the situation addressed by the arrangement described in the aforementioned patent application, where the tools consist of small, shanked contrivances that are relatively small compared to the main motor/drive housing, and thus requires a radically different approach which the present invention aims to provide.

Another storage arrangement for shanked tools is disclosed in US-A-4 575 255; wherein a base is provided with a plurality of peripherally arranged storage locations to receive the shanks of the tools, which are stored vertically, and a central storage location for the main motor/drive housing. In this case, however, a special base needs to be provided which plays no part in the normal operation of any of the appliances formed by attachment of the tools to the motor/drive housing. A similar arrangement is disclosed in DE-U1-87 05 778, and an alternative arrangement, wherein a housing which can store shanked tools is also used to assist in the configuration of various components for different functionalities, is disclosed in US-A-4 645 352.

According to the invention there is provided a tool storage arrangement for storing, in association with a domestic appliance having an electric motor contained within a housing, a plurality of tools, adapted for performing respective tasks when attached individually to said appliance, wherein the storage arrangement includes a stable platform providing storage locations for said tools and for said housing, and is characterized in that one at least of the tools is intended to be used within a bowl and includes a housing portion constituting a lid for said bowl, the bowl and its said lid forming said stable platform; by the provision of a holder device supported by said lid and provided with a support location for another tool, the said other tool being thereby supportable for storage on said stable platform and by said stable platform further including means to support said motor housing.

Preferably the holder device is provided with support locations for a plurality of tools. This enables the tools of the appliance to be kept together in a convenient way.

It is further preferable that the individual tools be releasably lockable to the holder device at the various support locations so that the tools may conveniently be carried as a unit.

Still more preferably, the holder device is configured to permit the motor housing to be coupled to the supporting tool in a manner that releasably locks the motor housing to the supporting tool. By this means, the motor housing may be conveniently stored and carried along with the tools. Conveniently, the holder device may be releasably secured to the supporting tool by the attachment of the motor housing thereto.

In further preferred arrangements, at least one individual tool has its own gearing system which is contained in a housing portion designed to blend visually with, and provide ready attachment to and release from, the drive output end of the motor housing. Typically the attachment is effected by means of co-operative components of a latching system such as a bayonet fixing. In these circumstances, the various housings and housing portions are preferably generally tubular and all of the tools are provided with identical latching components to interact with those provided at the outlet of the motor housing which, of course constitutes a common drive unit for all of the tools.

Conveniently the support location or locations formed at the holder device replicate the latching components provided at the outlet of the motor housing. Still more conveniently, the holder device is provided with an aperture enabling it to fit over a tubular portion of the supporting tool, enabling the motor housing to be attached (as if for use) to the supporting tool.

In a particular embodiment, the supporting tool comprises a mincer attachment intended for use in a bowl, and the bowl thus provides the aforesaid stable platform. In that embodiment, the holder device is formed with two support locations, each with identical, tool-receiving bayonet fixing components, and the tools to be supported thereby are a whisk and a blender respectively.

In order that the invention may be clearly understood and readily carried into effect, one embodiment thereof will now be described, by way of example only, with reference to the accompanying drawings, of which:
Figure 1 shows, in general perspective view, a tool storage arrangement in accordance with one example of the invention, together with typical tools and a motor housing; and
Figure 2 illustrates a detail of the motor housing.

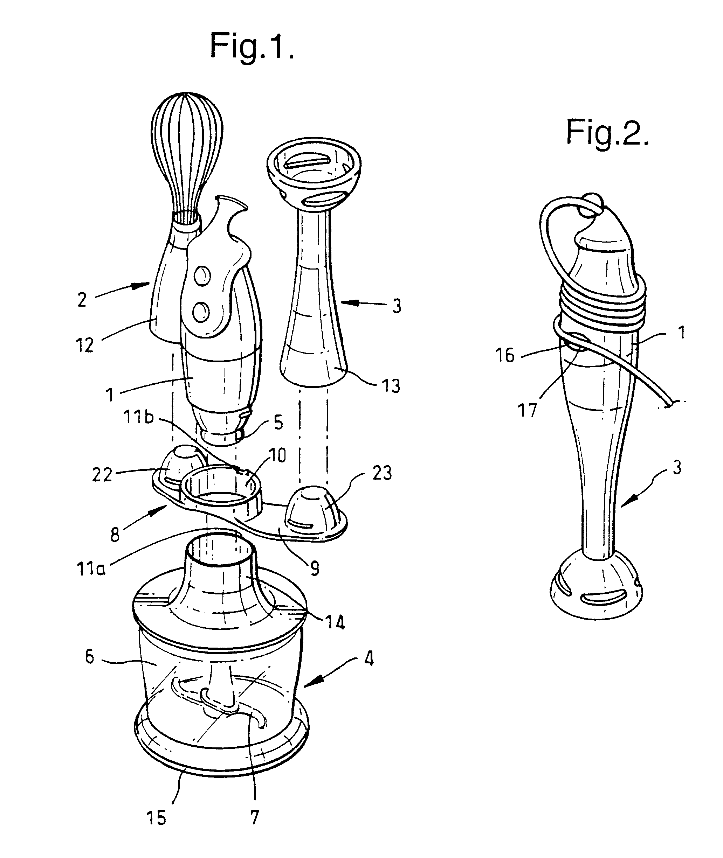

Referring now to Figure 1, the appliance represented comprises a hand-held food mixer/processor comprising an electric drive motor, contained in a generally tubular housing 1, and separate whisking, blending and mincing tools 2, 3 and 4 respectively. Each of the tools comprises an operative contrivance designed to have a desired mixing, whisking or comminuting effect upon foodstuffs, for example, and each of the tools 2 and 4 has a respective gear system contained within a respective, generally tubular, housing portion as shown at 12 and 14 respectively; the gear systems in this example comprising respective sets of epicyclic gears, each designed to reduce (by around a factor of nine or ten) the motor drive speed, which is typically in the region of 10,000 to 15,000 revolutions per minute. The wand-like housing 13 of the blending tool 3 contains no gearing, as the blender in this example runs directly at the motor's drive speed.

The housing portions 12, 13 and 14 all contain identical latching components intended to co-operate with complementary components provided at the motor drive output end 5 of the motor housing 1 to enable the tools to be readily attached to and released from the motor housing. Conveniently, the co-operative latching components comprise bayonet fixings; this technique being robust and reliable as well as accommodating ready and rapid mounting and interchanging of tools, but alternative techniques can be used, if desired, without departing from the invention. In particular, the bayonet latches may be supplemented with an anti-rotation lock comprised of resiliently mounted pips (not shown) adjacent the bayonet latching components of the drive motor's housing 1 which can engage with respective indents (not shown) formed adjacent the bayonet latching components of the housings 12, 13 and 14 when the bayonet components are fully inter-engaged.

In any event, the provision of individual gear systems, where necessary, for the various tools enables their speed and torque characteristics to be optimised for their respective primary tasks, and also permits the motor housing and its contents to be simplified and made more compact when compared with more conventional appliances of the kind described in relation to the aforementioned patent application.

As mentioned previously, the overall arrangement is such that, in appliances of the kind shown in Figure 1, the relative dimensions of the motor housing and the tools are much closer to one another than are those in more conventional appliances. The previously held concept of attaching the tools to the motor unit for storage is thus no longer as attractive in these circumstances and a different approach is needed.

In accordance with this example of the invention, a suitable arrangement is founded upon the use of one of the tools as a support tool. In this case, the mincing tool 4 has associated therewith a bowl 6 in which chopping blades 7 can rotate when the tool is in use. The mincing tool, in this example, comprises, in combination, a body portion 14 which serves in operation as a lid for the bowl 6 and houses the aforementioned epicyclic gearing, as well as mating with the output drive of the motor 1 as previously described. The blades 7 are attached to a shaft which is removable from the body portion 14, enabling the cutting component to be cleaned separately from the housing.

Bowl 6 provides a stable platform that conveniently forms the basis of this example of a storage arrangement in accordance with the invention. The other element essential to this embodiment is a holder device 8, which is formed of a rigid plastics material, as it must be self-supporting, and comprises a generally flat platform 9 formed with a central aperture 10 dimensioned to fit loosely over the upstanding end of the housing portion 14 of the tool 4. The outer surface of the housing portion 14 is made slightly conical so the holder device 8 may be readily designed to sit at an appropriate height merely by choosing an appropriate diameter for the aperture 10. A suitable anti-rotation device, such as co-operative pip and notch 11a, 11b, may be provided if necessary on the housing portion 14 and on the edge of the aperture 10 in the holder device 8.

Upstanding from the platform 9 of the holder device 8 are, in this example, two support locations 22 and 23 for the remaining tools 2 and 3. Each support location comprises a suitably shaped protrusion, conveniently replicating the bayonet latching components formed at the output end 5 of the motor housing 1, so that either of the tools 2 and 3 can be placed on either of the support locations 22 or 23 and releasably latched thereto by means of its own bayonet fixing components.

Finally, the motor housing 1 is coupled to the up-standing housing portion 14, as if for use of the tool 4, and the entire appliance can then be lifted, transported and/or stored as one. In this respect, it will be appreciated that it is desirable for the portion 14 of tool 4 to latch securely to the bowl 6 to ensure that the entire assembly may be lifted as one when desired. This latching can be achieved in any convenient manner, such as bayonet fixings, multi-start screw threadings and/or resiliently mounted pip/indent fixings.

Instead of the motor housing being mounted as for use on the tool 4, it may be laid in a suitable cradle mounting formed in a suitably dimensioned upstand around the aperture 10 in the holder device 8 and/or in the housing portion 14. There may or may not be a latch to hold the motor housing in place in its cradle, depending upon whether or not it is desired to lift the entire assembly as a whole or merely the tools. In this case, of course, a suitable detent mechanism may be provided to releasably latch the holder device 8 to the housing portion 14.

As a further alternative arrangement, the platform area 9 of the holder device 8 may be extended and configured to provide a separate and dedicated support location for the motor housing 1; such dedicated location being formed either with a replica of the bayonet fixing components used in the tools 2, 3 and 4, or comprising merely an aperture of sufficient size into which the motor housing 1 can be lowered to a desired depth and retained by contact, by interference fit or by positive latching as desired. In another alternative form of location for the motor housing 1, the aperture 10 in the platform 9 is made "blind" so that there is a depression that fits over the housing portion 14, but this is covered by a web which supports an upstand formed with the necessary bayonet components to co-operate with those in the drive output end 5 of the motor housing 1. This locates the motor housing 1 centrally relative to the stable platform provided by the bowl 6, for good stability, but does not require direct coupling of the motor housing 1 to the tool 4 as in use, thereby providing a safety feature in the event that the appliance as a whole is stored in reach of children and where it is connected to, or readily connectable to, mains electricity.

It is convenient for the bowl 6 to be provided with a flexible, discoidal member 15 that can be fitted either to the base of the bowl, as shown in Figure 1, to provide a non-scratch, non-skid base, or to the top of the bowl 6, as a lid therefor, to contain and/or protect product therein when the lid/housing 14 is removed.

With regard to the motor housing 1, Figure 2 illustrates a particularly advantageous arrangement whereby a cord grip 16, comprising a suitably dimensioned and shaped slot, is formed in a material such as that sold under the trade mark Santoprene and mounted or formed in a recess 17 of the motor housing 1.

It will be appreciated that the holder member 8 can be removed from the supporting tool 4, when the appliance is to be used, with the tools 2 and 3 in situ, and that these tools can conveniently be left attached to the holder device if they are not required for use; the holder device, with the tools 2 and 3 attached, being free-standing on a flat surface.

It will be appreciated that the holder member 8 can be removed from the supporting tool 4, when the appliance is to be used, with the tools 2 and 3 in situ, and that these tools can conveniently be left attached to the holder device if they are not required for use; the holder device, with the tools 2 and 3 attached, being free-standing on a flat surface.

## Claims

1. A tool storage arrangement for storing a plurality of tools (2, 3, 4) in conjunction with a domestic appliance having an electric motor contained within a motor housing (1), each of the tools being adapted to perform a respective task when attached to the motor housing (1) of said appliance; the storage arrangement being **characterized in that** (a) at least one of the tools (4) is intended to be used within a bowl (6) and includes a housing portion (14) constituting both a lid for said bowl (6) and a coupling, upstanding from the lid, for attachment of said motor housing for use of said at least one tool (4), the bowl and its said lid forming a stable platform; (b) a holder device (8) is provided, which holder device comprises a platform (9) formed with an aperture (10) dimensioned to fit over said upstanding coupling of the housing portion (14) of said at least one tool (4), thereby to be supportable upon said housing portion (14); (c) the platform (9) of said holder device (8) is further provided with a support location (22 or 23) for another of said tools (2 or 3), the said other tool (2 or 3) being thereby supportable for storage on said stable platform (6, 14), and (d) said stable platform (6, 14) further includes means to support said motor housing (1).

2. An arrangement according to claim 1 wherein the holder device (8) is provided with support locations (22, 23) for a plurality of tools (2, 3).

3. An arrangement according to claim 2 wherein means are provided for releasably locking the individual tools to the holder device at the various support locations so that the tools may be carried as a unit.

4. An arrangement according to any preceding claim wherein the holder device (8) is configured to permit the motor housing (1) to be coupled to the supporting tool (4) in a manner that releasably locks the motor housing to the supporting tool.

5. An arrangement according to claim 4 wherein the holder device (8) is releasably securable to the supporting tool by the attachment of the motor housing (1) to said supporting tool (4).

6. An arrangement according to any preceding claim wherein at least one individual tool (2 or 4) has its own gearing system; said gear system being contained in a respective housing portion (12 or 14) and each such housing portion comprising connector means providing ready attachment of the tool to, and release of the tool from, the motor housing (1).

7. An arrangement according to claim 6 wherein the connector means comprises co-operative components of a bayonet fixing.

8. An arrangement according to either of claims 6 or 7 wherein all of the connector means comprise identical latching components to interact with complementary components provided at the drive output end (5) of the motor housing (1).

9. An arrangement according to claim 8 wherein a replica of the said complementary components is provided at the or each support location (22, 23) of the holder device (8).

10. An arrangement according to any preceding claim wherein the holder device (8) is formed with two support locations (22, 23), and the tools (2, 3) to be supported thereby are a whisk and a blender respectively.

## Patentansprüche

1. Vorrichtung zur Aufbewahrung einer Vielzahl von Werkzeugen (2, 3, 4) mit einem Haushaltsgerät mit einem in einem Motorgehäuse (1) angeordneten Elektromotor, wobei jedes der Werkzeuge nach individueller Montage an dem besagten Motorgehäuse (1) des besagten Geräts für die Ausführung einer bestimmter Aufgabe geeignet ist; die Vorrichtung zur Aufbewahrung ist **dadurch gekennzeichnet, dass** (a) wenigstens eines der Werkzeuge zur Verwendung in einer Schüssel (6) bestimmt ist und ein Gehäusestück (14) besitzt, das sowohl einen Deckel für die besagte Schüssel (6) darstellt, als auch eine aus dem Deckel hochragende Kupplung für das Anbringen des besagten Motorgehäuses zur Verwendung mit dem besagten wenigstens einen Werkzeug (4), wobei die Schüssel und ihr besagter Deckel eine stabile Plattform bilden; (b) eine Halterung (8) mit einer Plattform (9) vorgesehen ist, in die eine Öffnung (10) mit solchen Abmessungen eingeformt ist, dass sie über die besagte, hochragende Kupplung des Gehäusestücks (14) des besagten wenigstens einen Werkzeugs (4) passt, so dass sie von dem besagten Gehäusestück (14) getragen werden kann; (c) die Plattform (9) der besagten Halterung (8) des weiteren eine tragenden Bereiche (22 oder 23) für ein anderes der besagten Werkzeuge (2 oder 3) aufweist, so dass das besagte andere Werkzeug (2 oder 3) zur Aufbewahrung auf der besagten stabilen Plattform (6, 14) abstützbar ist, und (d) die besagte stabile Plattform (6, 14) des weiteren tragende Mittel für das besagte Motorgehäuse (1) aufweist.

2. Vorrichtung gemäß Anspruch 1, bei der die Halterung (8) tragende Bereiche (22, 23) für eine Vielzahl von Werkzeugen (2, 3) aufweist.

3. Vorrichtung gemäß Anspruch 2, die Mittel für die lösbare Verriegelung der einzelnen Werkzeuge mit der Halterung an den verschiedenen tragenden Bereichen aufweist, so dass die Werkzeuge als komplette Einheit getragen werden können.

4. Vorrichtung gemäß einem der vorhergehenden Ansprüche, bei der die Halterung (8) so konfiguriert ist, dass das Motorgehäuse (1) auf eine solche Art und Weise an das tragende Werkzeug (4) angekoppelt werden kann, dass das Motorgehäuse lösbar mit dem tragenden Werkzeug verriegelt wird.

5. Vorrichtung gemäß Anspruch 4, bei der die Halterung (8) durch Anbringen des Motorgehäuses (1) an dem besagten tragenden Werkzeug (4) lösbar an dem tragenden Werkzeug gesichert werden kann.

6. Vorrichtung gemäß einem der vorhergehenden Ansprüche, bei der wenigstens ein Einzelwerkzeug (2 oder 4) ein eigenes Getriebesystem aufweist; besagtes Getriebesystem befindet sich in einem entsprechenden Gehäusestück (12 oder 14) und jedes solches Gehäusestück weist Verbindungsmittel auf, die bequemes Anbringen des Werkzeugs an und Lösen des Werkzeugs von dem Motorgehäuse (1) erlaubt.

7. Vorrichtung gemäß Anspruch 6, bei der das Verbindungsmittel zusammenwirkende Teile eines Bajonettverschlusses aufweist.

8. Vorrichtung gemäß einem der Ansprüche 6 oder 7, bei dem alle Verbindungsmittel identische Verriegelungen für das Zusammenwirken mit entsprechenden Passteilen aufweisen, die am Abtriebsende (5) des Motorgehäuses (1) angeordnet sind

9. Vorrichtung gemäß Anspruch 8, bei der eine Nachbildung der besagten Passteile an dem bzw. an jedem tragenden Bereich (22, 23) der Halterung (8) ausgebildet ist.

10. Vorrichtung gemäß einem der vorhergehenden Ansprüche, bei dem die Halterung (8) mit zwei tragenden Bereichen (22, 23) ausgebildet ist und es sich bei den von diesen zu tragenden Werkzeugen (2, 3) um einen Schneebesen und einen Mixer handelt.

## Revendications

1. Dispositif de rangement d'accessoires destiné à ranger une pluralité d'accessoires (2, 3, 4) conjointement à un appareil électroménager ayant un moteur électrique contenu dans un logement de moteur (1), chacun des accessoires étant adapté pour exécuter une tâche respective quand il est attaché au logement de moteur (1) dudit appareil ; le dispositif de rangement étant **caractérisé en ce que** (a) au moins un des accessoires (4) est prévu pour être utilisé dans un bol (6) et comprend une portion de logement (14) constituant à la fois un couvercle pour ledit bol (6) et un accouplement, se dressant en provenance dudit couvercle, pour fixation dudit logement de moteur dans le cas d'une utilisation dudit au moins un accessoire (4), le bol et son dit couvercle formant une plateforme stable ; (b) un dispositif porteur (8) est mis en oeuvre, dispositif porteur qui comporte une plateforme (9) formée avec une ouverture (10) dimensionnée pour se placer sur ledit accouplement dressé de la portion de logement (14) dudit au moins un accessoire (4), étant de ce fait capable d'être supporté sur ladite portion de logement (14) ; (c) la plateforme (9) dudit dispositif porteur (8) est par ailleurs dotée d'un emplacement de support (22 ou 23) pour un autre desdits accessoires (2 ou 3), ledit autre accessoire (2 ou 3) étant, de ce fait, capable d'être supporté à des fins de rangement sur ladite plateforme stable (6, 14), et (d) ladite plateforme stable (6, 14) comprend par ailleurs les moyens de supporter ledit logement de moteur (1).

2. Dispositif selon la revendication 1, dans lequel le dispositif porteur (8) est doté d'emplacements de support (22, 23) pour une pluralité d'accessoires (2, 3).

3. Dispositif selon la revendication 2, dans lequel des moyens sont mis en oeuvre pour verrouiller de manière détachable les accessoires individuels sur le dispositif porteur au niveau des différents emplacements de support de telle manière que les accessoires peuvent être transportés en un seul ensemble.

4. Dispositif selon l'une quelconque des revendications précédentes, dans lequel le dispositif porteur (8) est configuré pour permettre l'accouplement du logement de moteur (1) et de l'accessoire de soutien (4) de telle manière à verrouiller de manière détachable le logement de moteur sur l'accessoire de soutien.

5. Dispositif selon la revendication 4, dans lequel le dispositif porteur (8) est fixable de manière détachable sur l'accessoire de soutien par la fixation du logement de moteur (1) audit accessoire de soutien (4).

6. Dispositif selon l'une quelconque des revendications précédentes, dans lequel au moins un accessoire individuel (2 ou 4) dispose de son propre système d'engrenage ; ledit système d'engrenage étant contenu dans une portion du logement respective (12 ou 14) et chaque telle portion de logement comportant un moyen de type connecteur mettant en oeuvre la fixation facile de l'accessoire sur le logement de moteur (1) ainsi que sa dépose.

7. Dispositif selon la revendication 6, dans lequel le moyen de type connecteur comporte des composants coopératifs d'une fermeture à baïonnette.

8. Dispositif selon la revendication 6 ou la revendication 7, dans lequel tous les moyens de type connecteur comportent des composants de fermeture identiques pour interagir avec les composants complémentaires mis en oeuvre au niveau de l'extrémité de sortie d'entraînement (5) du logement de moteur (1).

9. Dispositif selon la revendication 8, dans lequel une reconstitution desdits composants complémentaires est mise en oeuvre au niveau de l'emplacement de support ou de chaque emplacement de support (22, 23) du dispositif porteur (8).

10. Dispositif selon l'une quelconque des revendications précédentes, dans lequel le dispositif porteur (8) est formé avec deux emplacements de support (22, 23), et les accessoires (2, 3) devant être supportés de ce fait sont un fouet et un mixer respectivement.
